# FASCICULE DE BREVET EUROPEEN

(11) **EP 3 800 037 B1**
(45) Date de publication et mention de la délivrance du brevet: **27.07.2022**
(21) Numéro de dépôt: 20196049.9
(22) Date de dépôt: 14.09.2020
(51) Int. Cl.: B29C 70/54, B29C 70/30, B29C 70/08, B29L 31/08

(54) **PROCEDE DE FABRICATION D'UN ORGANE DE RENFORT D'UNE PALE D'AERONEF**
VERFAHREN ZUR HERSTELLUNG EINES VERSTÄRKUNGSORGANS EINES LUFTFAHRZEUG-ROTORBLATTS
METHOD FOR MANUFACTURING A MEMBER FOR REINFORCING AN AIRCRAFT BLADE

(30) Priorité: 01.10.2019 FR 1910867
(43) Date de publication de la demande: 07.04.2021
(73) Titulaire: Airbus Helicopters, 13725 Marignane Cedex (FR)
(72) Inventeur: GAFFIERO, Jacques, 75017 PARIS (FR)
(74) Mandataire: GPI Brevets

(56) Documents cités:
- EP-A1- 3 248 764
- DIRK FELTIN ET AL: "Tailored Fibre Placement Cost-Effective Preforms For High Loaded Composites", 2001: A MATERIALS AND PROCESSES ODYSSEY : 46TH INTERNATIONAL SAMPE SYMPOSIUM AND EXHIBITION, LONG BEACH CONVENTION CENTER, LONG BEACH, CALIFORNIA, MAY 6 - 10, 2001 / ED. BY LINAS REPECKA, SAMPE. LING BEACH , CA, US, 6 mai 2001 (2001-05-06), pages 2463-2471, XP008180273, ISBN: 978-0-938994-90-9
- Anonymous: "Tailored Fiber Placement: Besting metal in volume production : CompositesWorld", , 1 janvier 2013 (2013-01-01), pages 1-6, XP055272926, Extrait de l'Internet: URL:http://www.compositesworld.com/article s/tailored-fiber-placement-besting-metal-i n-volume-production [extrait le 2016-05-17]

## Description

La présente invention concerne un procédé de fabrication d'un organe de renfort d'une pale en matériaux composites d'aéronef.

Un tel organe de renfort peut notamment être formé par un longeron de pale et un renfort d'emplanture. Une pale peut comporter au moins une douille pour être attachée directement ou indirectement à un moyeu de rotor d'aéronef.

De façon générale, on connait deux types différents de procédés de fabrication des organes de renfort de pale en matériaux composites.

En effet, un premier type de procédé de fabrication des organes de renfort de pale, tel que présenté dans le document EP 3 248 764, consiste à positionner dans un moule des mèches ou des rubans composés de fils de renfort tels que des fils en fibres de verre, de carbone ou d'aramide. Ces mèches sont positionnées de manière à suivre des trajectoires prédéterminées en fonction des flux d'efforts ou des contraintes mécaniques auxquels sont soumis ces organes de renfort.

Par exemple, les fils de renfort peuvent être positionnés selon un parcours qui commence dans une pale au niveau d'une extrémité distale située sur un rayon extérieur d'un disque rotor. Les fils de renfort longent ensuite un bord d'attaque de la pale jusqu'à une extrémité proximale de la pale, s'enroulent en effectuant un demitour au niveau de points de liaison avec un moyeu du rotor, puis repartent vers l'extrémité distale de la pale.

De telles mèches peuvent notamment être pré-imprégnées de résine ou imprégnées de résine dans le moule par un procédé d'injection ou d'infusion à basse pression de résine liquide dans un moule rigide et fermé. Un tel procédé d'injection est généralement désigné en langue anglaise par l'expression « Resin transfer molding » ou son acronyme « RTM ».

Cependant ce premier type de procédé de fabrication nécessite de nombreuses opérations manuelles pour positionner précisément les mèches les unes par rapport aux autres. En outre, de telles opérations manuelles sont complexes à réaliser, voire impossibles à réaliser automatiquement par un robot directement dans le moule.

Si une dépose robotisée hors moule sur un outillage support intermédiaire est appliquée pour la réalisation du renfort selon ce premier type de procédé, il apparait qu'une fois les mèches positionnées, il est alors compliqué de manipuler et de positionner précisément ces fils de renforts dans le moule pour procéder à la polymérisation de la résine.

Un second type de procédé de fabrication des organes de renfort de pale dit « stratifié » consiste à réaliser un empilage de nappes textiles tissées ou non tissées en fils de renfort puis à noyer ces nappes textiles dans une résine. Afin d'assurer la fonction de reprise des efforts, essentiellement centrifuges, les fils de renfort de ces nappes textiles sont donc orientées de façon rectiligne le long d'un axe principal de la pale, lui-même aligné avec un rayon du disque rotor. Il apparait ainsi que ces renforts de fibres exclusivement rectilignes ne constituent pas d'enroulement autour des points de fixation de la pale sur le moyeu.

Il en résulte ainsi une discontinuité des fils de renfort précisément autour des points de fixation dans la zone d'attache de la pale sur le moyeu. En outre, ces points de fixation sont les points par lesquels passent et sont concentrés les flux d'efforts.

Il apparait donc nécessaire de renforcer la zone de ces points fixation au niveau de la liaison entre la pale et le moyeu.

Pour cela, des renforts de fibres biais peuvent être intercalés entre les renforts de fibres longitudinales.

Par exemple, pour chaque pli de fibres longitudinales c'est-à-dire orientées selon le rayon du disque rotor, et contenu dans un plan parallèle au disque rotor, il peut être interposé un deuxième pli dans un plan parallèle au premier, de même épaisseur et constitué pour moitié de fibres orientées à +45° par rapport au rayon du disque rotor, et par moitié de fibres orientées à -45° par rapport au rayon du disque rotor.

Par ailleurs, ces nappes textiles peuvent par exemple être pré-imprégnées d'une résine ou être imprégnées par un procédé d'injection RTM ou d'infusion d'une résine liquide dans un moule rigide et fermé.

En outre, lors de la découpe des nappes textiles pour par exemple pouvoir placer des douilles au travers des différentes nappes textiles, il apparait toutefois une discontinuité des fibres renfort autour des points de fixation de la pale sur le moyeu rotor. Une telle discontinuité peut donc être compensée par une reprise des efforts par cisaillement dans la résine. Toutefois, cette contrainte peut imposer des précautions supplémentaires de fabrication et d'inspection ainsi que des opérations de maintenance régulières pour s'assurer de la parfaite santé structurale de cet organe de renfort ou de la pale. Des conditions de serrage particulières peuvent être également requises pour garantir l'intégrité de la liaison entre par exemple un manchon solidaire du moyeu et le longeron de pale.

En outre, les dispositions constructives pour assurer les conditions de liaison de la pale sur le manchon constituent des accroissements de volumes des pièces existantes ainsi que l'ajout d'éléments mécaniques qui ont pour effet d'alourdir les organes du moyeu rotor. Une telle charge supplémentaire au niveau du moyeu rotor peut avoir pour conséquence de limiter les performances de vol et l'autonomie de l'aéronef ainsi équipé.

Par ailleurs, il est connu d'utiliser un procédé de couture pour permettre de maintenir en position des fils de renfort sur un support. De tels procédés de couture ont notamment été décrits par M. Dirk FELTIN dans le document dénommé « Tailored fibre placement - cost-effective preforms for high loaded composites » reprenant une présentation d'une conférence internationale du 6-10 mai 2001 ou encore dans un article dénommé « Tailored fiber placement : besting metal in volume production » présenté en septembre 2013 sur la page internet www.compositesworld .com/articles/tailored-fiber-placement-besting-metal-in-volume-production.

De tels procédés n'ont cependant jamais été mis en œuvre pour fabriquer des organes de renfort de pale d'aéronef.

La présente invention a alors pour objet de proposer un procédé de fabrication innovant visant à s'affranchir au moins partiellement des limitations mentionnées ci-dessus. Un tel procédé vise en effet à rendre d'une part automatisable par un robot différentes étapes de la fabrication de l'organe de renfort et d'autre part d'optimiser le positionnement et la continuité des fils de renfort ce qui a pour conséquence d'optimiser la résistance, la fiabilité, le coût de production et les performances d'un aéronef ainsi équipé.

L'invention concerne donc un procédé de fabrication d'un organe de renfort d'une pale d'aéronef.

Selon l'invention, un tel procédé est remarquable en ce qu'il comporte au moins :
- une pluralité d'étapes de positionnement pour positionner des faisceaux de fils de renfort sur des faces supérieures de supports, chaque étape de positionnement comprenant un positionnement d'au moins un faisceau de fils de renfort sur une face supérieure d'un support,
- une pluralité d'étapes de solidarisation pour solidariser les faisceaux de fils de renfort avec les faces supérieures des supports, chaque étape de solidarisation comprenant une solidarisation du ou des faisceaux de fils de renfort avec le support pour former un sous-ensemble monolithique,
- une étape de superposition d'une pluralité de sous-ensembles monolithiques suivant une même direction de superposition dans un moule, la pluralité de sous-ensembles monolithiques comportant un premier sous-ensemble monolithique et un second sous-ensemble monolithique, le au moins un faisceau de fils de renfort du premier sous-ensemble monolithique étant superposé avec une face inférieure opposée à la face supérieure du second sous-ensemble monolithique et
- une étape de polymérisation d'une résine dans le moule.

Autrement dit, un tel procédé de fabrication permet de simplifier la fabrication des organes de renfort présents dans une pale d'aéronef. Les faisceaux de fils de renfort fils peuvent comporter des fils à haute ténacité comprenant par exemple des fibres de verre, de carbone ou d'aramide. Le support est quant à lui avantageusement souple et faiblement élastique tel une feuille de mat de fibres de verre.

En outre, les étapes de positionnement ainsi que les étapes de solidarisation des faisceaux de fils de renfort sur des supports peuvent être réalisées de différentes manières.

Ainsi, selon un exemple, ces étapes de positionnement et de solidarisation peuvent être réalisées manuellement par un opérateur.

Selon un autre exemple, les étapes de positionnement et de solidarisation peuvent également être réalisées de façon automatisée au moyen d'une ou plusieurs machines comportant des moyens robotisés.

De même, l'étape de superposition d'une pluralité de sous-ensembles monolithiques dans un moule peut également être réalisée manuellement par un opérateur ou encore être réalisée de manière automatisée.

Par exemple, ces étapes de positionnement peuvent être assurées par des bras robots polyarticulés ou par des portiques cartésiens équipés d'effecteurs de préemption comme des systèmes de plateau à dépression ou des ventouses.

Outre, les sous-ensembles monolithiques peuvent ainsi être réalisés à plat sur une machine dédiée. Une fois réalisés, ces sous-ensembles monolithiques peuvent rester par ailleurs suffisamment souples pour être mis en forme ultérieurement dans le moule pour suivre le vrillage d'un longeron de pales d'un aéronef.

Par ailleurs, la résine peut être induite dans le moule de différentes manières. Par exemple la résine peut être sous forme liquide et injectée dans le moule sous pression selon un procédé dit RTM ou encore sous une forme d'infusion selon le procédé dit LRI correspondant à l'acronyme anglais de l'expression « Liquid Resin Infusion ». La résine peut également pré-imprégner les faisceaux de fils de renfort et ou les supports. Un film de résine peut également être introduit dans le moule entre chaque sous-ensemble monolithique selon le procédé RFI correspondant à l'acronyme anglais de l'expression « Resin Film Infusion ».

Avantageusement, chaque étape de positionnement du ou des faisceaux de fils de renfort sur un support peut être mise en œuvre simultanément avec une étape de solidarisation du ou des faisceaux de fils de renfort avec le support, les étapes de positionnement et les étapes de solidarisation étant effectuées par une même machine. Par exemple, une machine apte à mettre en œuvre un procédé de broderie automatisé ou « TFP » correspondant à l'acronyme anglais de l'expression « Tailored Fiber Placement".

Selon un autre principe de dépose, une telle machine peut par exemple comporter deux têtes robotisées se déplaçant indépendamment mais simultanément par rapport à une table sur laquelle est agencé un support. Une première tête robotisée permet alors de positionner un ou des faisceaux de fils de renfort sur le support et une seconde tête permet quant à elle de solidariser les faisceaux de fils de renfort avec le support.

En outre, la forme finale d'un organe de renfort d'une pale d'aéronef, tel que par exemple celle d'un longeron de pale, peut comporter une forme sensiblement vrillée,

Ainsi pour réaliser la fabrication de cette forme finale de l'organe de renfort, l'étape de superposition d'une pluralité de sous-ensembles monolithiques dans un moule peut comporter une sous-étape de vrillage des sous-ensembles monolithiques.

Autrement dit, les sous-ensembles monolithiques ne sont pas positionnés sur un plan mais sur une forme s'entendant en trois dimensions telle une surface gauche permettant de vriller les sous-ensembles monolithiques préalablement à l'étape de polymérisation. Une telle sous-étape de vrillage permet alors d'obtenir directement la forme externe vrillée d'un organe de renfort d'une pale d'aéronef.

L'assemblage de ces sous ensemble en trois dimensions peut être assuré par un bras robot polyarticulé équipé d'une tête de couture ou de cloutage.

En outre, les organes de renfort fabriqués à partir du procédé de fabrication conforme à l'invention peuvent par exemple comporter chacun une forme finale en trois dimensions sensiblement vrillée. Par ailleurs, une telle forme finale vrillée peut être obtenue de différente manière par la superposition des sous-ensembles monolithiques.

Selon un premier mode de réalisation, préalablement à la pluralité d'étapes de positionnement, le procédé peut comporter une étape de dévrillage pour obtenir une forme dévrillée à partir d'une forme finale de l'organe de renfort puis une étape de discrétisation de la forme dévrillée en une pluralité de formes planes parallèles, les étapes de dévrillage puis de discrétisation définissant la forme et le nombre de sous-ensembles monolithiques formant l'organe de renfort.

Selon ce première mode de réalisation, les étapes de dévrillage et de discrétisation sont donc réalisées préalablement à la pluralité d'étapes de positionnement de faisceaux de fils de renfort sur des supports. Les étapes de dévrillage et de discrétisation permettent ainsi de définir de manière plane les différents sous-ensembles monolithiques.

Selon un second mode de réalisation, préalablement à la pluralité d'étapes de positionnement, le procédé peut comporter une étape de discrétisation d'une forme finale de l'organe de renfort en une pluralité de formes vrillées parallèles puis une étape de dévrillage pour obtenir une pluralité de formes planes à partir de la pluralité de formes vrillées, les étapes de discrétisation puis de dévrillage définissant la forme et le nombre de sous-ensembles monolithiques formant l'organe de renfort.

Un tel second mode de réalisation permet ainsi d'inverser l'ordre de mise en œuvre de l'étape de discrétisation et de l'étape de dévrillage par rapport au premier mode de réalisation. En outre, un tel second mode de réalisation permet également de définir de manière plane les différents sous-ensembles monolithiques.

Par ailleurs, la solidarisation entre les faisceaux de fils de renfort et le support peut également être réalisée de différentes manières. Des exemples d'étapes de solidarisation sont donnés à titre indicatif ci-après et peuvent également être combinés entre eux de manière à immobiliser les faisceaux de fils de renfort par rapport au support tout en conservant une bonne souplesse pour les sous-ensembles monolithiques ainsi réalisés.

Selon un premier exemple, chaque étape de solidarisation peut comporter une étape de couture du ou des faisceaux de fils de renfort sur le support.

Dans ce cas, une ou plusieurs têtes de couture suivent le ou les faisceaux de fils de renfort déposés sur le support. Cette tête de couture permet d'immobiliser, au moins temporairement, le ou les faisceaux de fils de renfort au moyen d'au moins un fil de couture traversant le support entre une face supérieure sur laquelle le ou les faisceaux de fils de renfort sont déposés et une face inférieure opposée. Un tel fil de couture peut notamment être de type multifilament ou être de type monofilament.

De plus, un tel fil de couture peut avantageusement être formé dans un matériau thermoplastique fusible avec la résine polymérisant dans le moule. Par exemple, un matériau formant le fil de couture peut être choisi parmi le groupe comportant le Polyétheréthercétone généralement désigné par le sigle « PEEK » et le Polyétherimide désigné par le sigle « PEI ».

Selon un deuxième exemple alternatif ou complémentaire au premier exemple, chaque étape de solidarisation peut comporter une étape de collage du ou des faisceaux de fils de renfort sur le support.

Une telle solidarisation par collage peut être réalisée en utilisant une colle ou plus généralement tout intermédiaire de collage rapporté sur le support préalablement aux étapes de positionnement des faisceaux de fils de renfort sur les supports ou encore en utilisant un procédé d'imprégnation du support et/ou des faisceaux de fils de renfort avec une résine de contact. Le simple contact entre les faisceaux de fils de renfort et les supports permet alors de les lier entre eux par collage.

Selon un troisième exemple alternatif ou complémentaire aux premier et deuxième exemples, chaque étape de solidarisation peut comporter une solidarisation par une pluralité de liens thermoplastiques du ou des faisceaux de fils de renfort sur le support.

Un tel troisième exemple consiste donc à solidariser ponctuellement des liens thermoplastiques avec les supports pour immobiliser le ou les faisceaux de fils de renfort sur le support. De tels liens thermoplastiques ne traversent alors pas le support mais sont thermo-soudés localement à une face supérieure des supports sur laquelle sont positionnés chaque faisceau de fils de renfort.

Selon ce troisième exemple, les liens thermoplastiques peuvent être formés dans un matériau fusible avec la résine.

De cette manière, la cohésion entre les faisceaux de fils de renfort et la résine peut être améliorée. En outre, un tel troisième exemple peut notamment permettre d'améliorer la résistance aux chocs de la résine.

Selon un quatrième exemple, alternatif ou complémentaire aux précédents, la solidarisation peut être aussi effectuée par un adhésif sous forme de poudre, ou de filaments de résine thermoplastique préalablement intégrés dans le ou les faisceaux de fils de renfort. L'application d'une pression sur le ou les faisceaux de fils de renfort avec un élément chauffant permet alors de lier le ou les faisceaux de fils de renfort par collage avec le support.

Avantageusement, préalablement à l'étape de superposition de la pluralité de sous-ensembles monolithiques dans le moule, le procédé de fabrication peut comporter une étape de découpe de la pluralité de sous-ensembles monolithiques.

En effet, les supports peuvent être découpés préalablement à leurs mises en place dans le moule. En outre, les supports peuvent par exemple présenter initialement une forme de feuille rectangulaire obtenue par le découpage d'un rouleau. Cependant, chaque sous-ensemble monolithique de la pluralité de sous-ensembles monolithiques peut comporter une forme particulière liée à sa position dans le moule ou sa position de superposition par rapport aux autres sous-ensembles monolithiques.

De plus, une telle étape de découpe de la pluralité de sous-ensembles monolithiques peut également permettre de réaliser des trous d'indexage dans les supports pour indexer en position chacun des différents sous-ensembles monolithiques à l'intérieur du moule.

Selon un autre aspect, préalablement à l'étape de polymérisation de la résine dans le moule, le procédé de fabrication peut comporter une étape de mise en place d'un équipement dans le moule, l'équipement s'entendant au moins selon une direction parallèle à la direction de superposition de la pluralité de sous-ensembles monolithiques.

Un tel équipement peut notamment se présenter sous la forme d'une douille métallique pour permettre une fixation ultérieure de la pale d'aéronef sur un moyeu de rotor ou un manchon.

Un équipement peut également consister en une pièce de renfort agencée au travers des différentes couches constituées par la pluralité de sous-ensembles monolithiques. Ainsi, un tel équipement peut permettre d'augmenter localement la raideur en torsion de l'organe de renfort et donc de la pale d'aéronef ainsi équipée.

Selon un autre aspect, la pluralité de sous-ensembles monolithiques pouvant comporter un premier et un second sous-ensembles monolithiques, le procédé de fabrication peut comporter une étape supplémentaire de solidarisation du premier sous-ensemble monolithique avec le second sous-ensemble monolithique.

Une telle étape supplémentaire de solidarisation d'un premier et d'un second sous-ensembles monolithiques permet par exemple de faciliter leur mise en place ultérieure dans le moule. Cette étape supplémentaire de solidarisation permet alors d'éviter tout déplacement relatif entre le premier et le second sous-ensembles monolithiques une fois placés dans le moule.

Dans ce cas, l'étape supplémentaire de solidarisation peut comporter une solidarisation choisie parmi le groupe comportant la couture, le collage et le cloutage.

En effet, de telles formes de solidarisation sont particulièrement adaptées pour solidariser des sous-ensembles monolithiques entre eux préalablement à l'étape de polymérisation de la résine dans le moule. Comme précédemment, le fil de couture ou l'intermédiaire de collage peut être formé dans un matériau thermoplastique fusible avec la résine polymérisant dans le moule.

Avantageusement, le support d'un ensemble monolithique peut être choisi parmi le groupe comportant les grilles, les nappes textiles tissées, les mats textiles non tissés et les films.

Un tel groupe présente en effet des caractéristiques intrinsèques de souplesse et de légèreté optimales aptes notamment à permettre à la résine de fluer dans le moule au travers des différents ensembles monolithiques.

En pratique, le support d'un ensemble monolithique peut être formé dans un matériau fusible avec la résine.

De même que décrit précédemment, un tel agencement permet d'améliorer la cohésion entre les faisceaux de fils de renfort et la résine. En outre, cette cohésion améliorée peut notamment permettre d'augmenter la résistance aux chocs de la résine.

Par exemple, un matériau formant le support peut être choisi parmi le groupe comportant le Polyétheréthercétone généralement désigné par le sigle « PEEK » et le Polyétherimide désigné par le sigle « PEI ».

Selon un autre aspect, l'étape de superposition d'une pluralité de sous-ensembles monolithiques dans un moule peut être automatisée au moyen d'un robot configuré pour identifier différents sous-ensembles monolithiques stockés dans un magasin.

Une telle étape de superposition d'une pluralité de sous-ensembles monolithiques est alors idéale pour améliorer l'industrialisation et optimiser les coûts de fabrication d'un tel organe de renfort d'une pale d'aéronef.

L'invention et ses avantages apparaîtront avec plus de détails dans le cadre de la description qui suit avec des exemples donnés à titre illustratif en référence aux figures annexées qui représentent :
[Fig 1] la figure 1, une vue en perspective illustrant la fabrication d'un organe de renfort d'une pale d'aéronef, conformément à l'invention,
[Fig 2] la figure 2, une vue en perspective d'une pale d'aéronef, conformément à l'invention,
[Fig 3] la figure 3, un schéma de principe représentatif d'un premier exemple de procédé de fabrication conforme à l'invention,
[Fig 4] la figure 4, un schéma de principe représentatif d'un deuxième exemple de procédé de fabrication conforme à l'invention,
[Fig 5] la figure 5, un schéma de principe représentatif d'un troisième exemple de procédé de fabrication conforme à l'invention, et
[Fig 6] la figure 6, un schéma de principe représentatif d'un quatrième exemple de procédé de fabrication conforme à l'invention.

Les éléments présents dans plusieurs figures distinctes sont affectés d'une seule et même référence.

Comme déjà évoqué, l'invention se rapporte au domaine des procédés de fabrication des organes de renfort d'une pale d'aéronef.

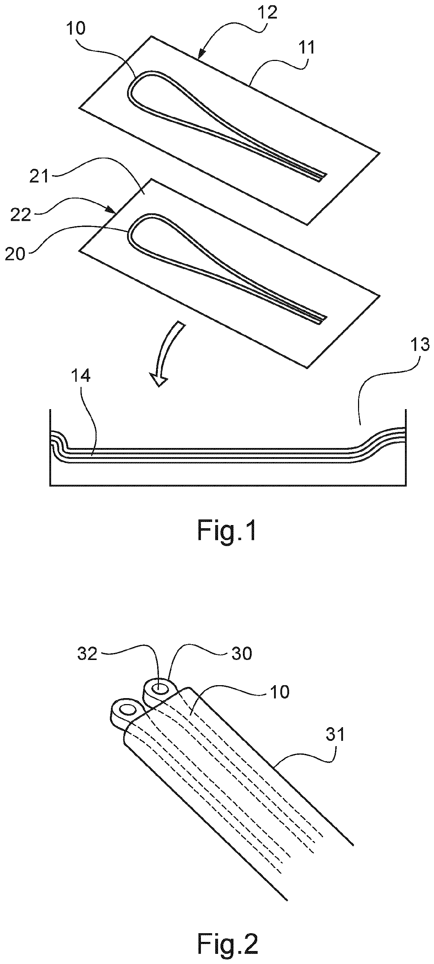

Tel que représenté à la figure 1, chaque organe de renfort de pale peut comporter des faisceaux de fils de renfort 10, 20 destinés à être noyés dans une résine 14 à l'intérieur d'un moule 13. Selon l'invention, les faisceaux de fils de renfort 10, 20 sont préalablement positionnés sur des supports 11, 21 et solidarisés avec ces supports 11, 21 de manière à les conformer selon une forme et une orientation prédéterminées.

Une pluralité de sous-ensembles monolithiques 12, 22 peut ainsi être formé par les faisceaux de fils de renfort 10, 20 solidarisés avec les supports 11, 21. Les faisceaux de fils de renfort 10, 20 peuvent alors être placés précisément dans le moule 13 simplement en superposant les sous-ensembles monolithiques 12, 22 les uns au dessus des autres qui peuvent comporter des trous ou des repères pour indexer en position les supports 11, 21 par rapport au moule 13.

Tel que représenté à la figure 2, ces sous-ensembles monolithiques 12, 22 peuvent également être associés à un équipement 32 mis en place dans le moule 13. Un tel équipement 32 peut notamment consister en une douille de manière à permettre une solidarisation de la pale 31 avec un moyeu de rotor et/ou un manchon non représenté(s) à la figure 2.

En outre, une fois les sous-ensembles monolithiques 12, 22 superposés dans le moule 13 et noyés dans la résine 14, ils permettent de former un organe de renfort 30 tel que notamment un longeron de la pale 31. Un tel longeron est alors particulièrement résistant car formé par des faisceaux de fils de renfort 10, 20 superposés parallèlement les uns au dessus des autres et ne présentent aucune discontinuité.

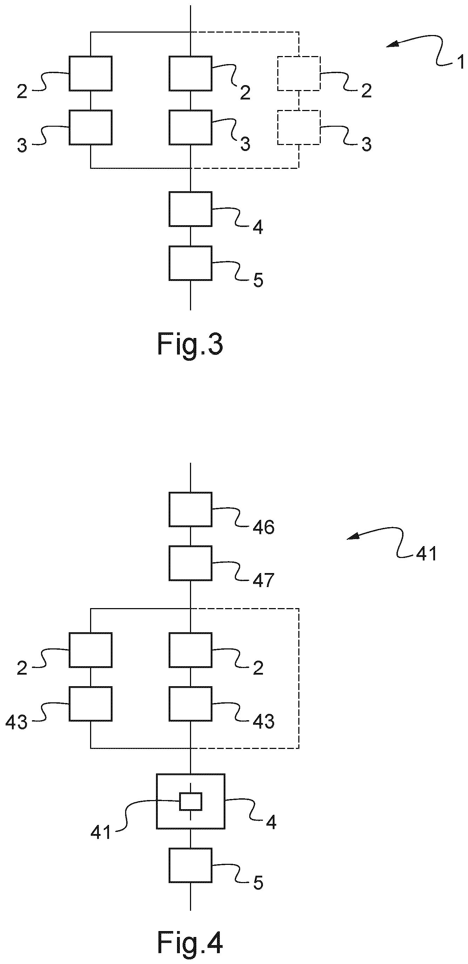

Selon un premier exemple de procédé de fabrication d'un tel organe de renfort 30 représenté à la figure 3, le procédé 1 comporte une pluralité d'étapes de positionnement 2 de faisceaux de fils de renfort 10, 20 sur des supports 11, 21, chaque étape de positionnement 2 comprenant un positionnement d'au moins un faisceau de fils de renfort 10 sur un support 11.

En outre, le procédé 1 comporte également une pluralité d'étapes de solidarisation 3 permettant de solidariser les faisceaux de fils de renfort 10, 20 avec les supports 11, 21, chaque étape de solidarisation 3 comprenant une solidarisation du ou des faisceaux de fils de renfort 10, 20 avec le support 11, 21 pour former un sous-ensemble monolithique 12, 22 tel que décrit précédemment.

Le procédé 1 comporte alors ensuite une étape de superposition 4 permettant de superposer suivant une même direction de superposition les sous-ensembles monolithiques 12, 22 dans le moule 13.

Enfin, le procédé 1 comporte une étape de polymérisation 5 consistant à polymériser la résine 14 dans le moule 13. Cette étape de polymérisation 5 permet alors de former un organe de renfort 30 particulièrement solide et résistant de manière à conférer à une pale d'aéronef des caractéristiques techniques de résistance optimales.

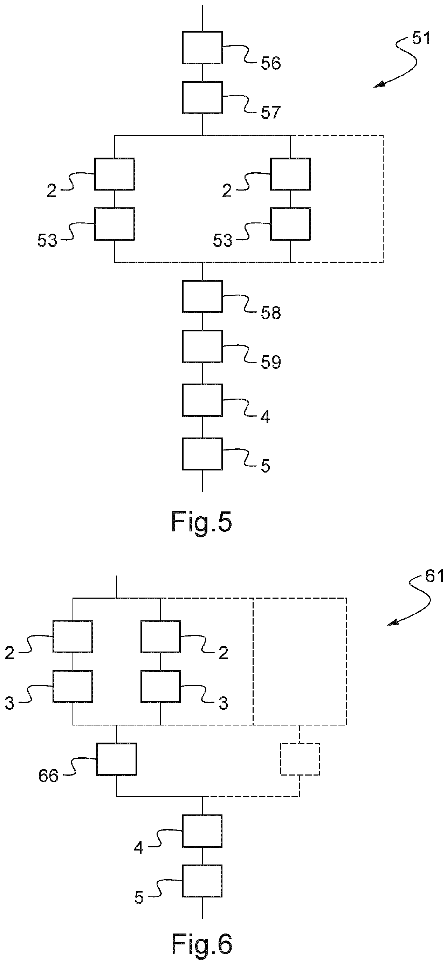

Selon deux autres exemples de procédés de fabrication d'un tel organe de renfort 30 représentés aux figures 4 et 5, les procédés 41 et 51 peuvent également comporter des étapes préliminaires permettant de définir le nombre nécessaire de sous-ensembles monolithiques 12, 22 ainsi les formes des différents sous-ensembles monolithiques 12, 22. Les étapes préliminaires des exemples décrits aux figures 4 et 5 peuvent être avantageusement mises en œuvre lorsque la forme finale de l'organe de renfort 30 présente un vrillage et notamment lorsque l'organe de renfort 30 est un formé par un longeron de pale d'aéronef.

Ainsi, selon un deuxième exemple de procédé de fabrication d'un tel organe de renfort 30 représenté à la figure 4, le procédé 41 comporte, préalablement à la pluralité d'étape de positionnement 2, une étape de dévrillage 46 permettant d'obtenir une forme dévrillée à partir d'une forme finale de l'organe de renfort 30. Le procédé 41 comporte ensuite une étape de discrétisation 47 de la forme dévrillée en une pluralité de formes planes parallèles.

En outre comme déjà évoqué, de telles étapes de dévrillage 46 puis de discrétisation 47 permettent ainsi de définir la forme et le nombre de sous-ensembles monolithiques 12, 22 formant l'organe de renfort (30).

De plus un tel procédé 41 peut également comporter une étape de superposition 4 d'une pluralité de sous-ensembles monolithiques 12, 22 dans un moule 13, cette étape de superposition 4 comportant une sous-étape de vrillage 41 des sous-ensembles monolithiques 12, 22.

Selon un troisième exemple de procédé de fabrication d'un tel organe de renfort 30 représenté à la figure 5, le procédé 51 comporte dans ce cas une étape de discrétisation 56 permettant de discrétiser une forme finale de l'organe de renfort 30 en une pluralité de formes vrillées parallèles. Le procédé 51 comporte alors ensuite une étape de dévrillage 57 pour obtenir une pluralité de formes planes à partir de la pluralité de formes vrillées. De cette manière, les étapes de discrétisation 56 puis de dévrillage 57 permettent également de définir la forme et le nombre de sous-ensembles monolithiques 12, 22 formant l'organe de renfort 30.

Un tel troisième exemple de procédé de fabrication 51 peut comporter une étape de découpe 58 de la pluralité de sous-ensembles monolithiques 12, 22. Une telle étape de découpe 58 permet par exemple de supprimer des parties inutiles des supports 11, 21 avant leur mise en place dans le moule 13 et donc avant l'étape de superposition 4 des sous-ensembles monolithiques 12, 22.

Enfin, un tel procédé de fabrication 51 peut avantageusement comporter une étape de mise en place 59 d'un équipement 32, tel une douille métallique, dans le moule 13. Un tel équipement 32 est alors destiné à être agencé au travers de la pluralité de sous-ensembles monolithiques 12, 22 et est noyé dans la résine 14.

Selon un quatrième exemple de procédé de fabrication d'un tel organe de renfort 30 représenté à la figure 6, le procédé 61 peut également comporter une étape supplémentaire de solidarisation 66 consistant à solidariser un premier sous-ensemble monolithique 12 avec un second sous-ensemble monolithique 22. Une telle étape supplémentaire de solidarisation 66 peut alors par exemple consister en une solidarisation choisie parmi le groupe comportant la couture, le collage et le cloutage. De cette manière, le premier sous-ensemble monolithique 12 et le second sous-ensemble monolithique 22 sont donc positionnés précisément l'un par rapport avant l'étape de superposition 4 de la pluralité de sous-ensembles monolithiques 12, 22 dans un moule 13.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Procédé de fabrication (1, 41, 51, 61) d'un organe de renfort (30) d'une pale (31) d'aéronef, ledit procédé (1, 41, 51, 61) comportant au moins :
• une pluralité d'étapes de positionnement (2) pour positionner des faisceaux de fils de renfort (10, 20) sur des faces supérieures de supports (11, 21), chaque étape de positionnement (2) comprenant un positionnement d'au moins un faisceau de fils de renfort (10) sur un support (11),
• une pluralité d'étapes de solidarisation (3, 43, 53) pour solidariser lesdits faisceaux de fils de renfort (10, 20) avec lesdites faces supérieures desdits supports (11, 21), chaque étape de solidarisation (3, 43, 53) comprenant une solidarisation dudit au moins un faisceau de fils de renfort (10, 20) avec ledit support (11, 21) pour former un sous-ensemble monolithique (12, 22),
• une étape de superposition (4) d'une pluralité de sous-ensembles monolithiques (12, 22) suivant une même direction de superposition dans un moule (13), ladite pluralité de sous-ensembles monolithiques (12, 22) comportant un premier sous-ensemble monolithique (12) et un second sous-ensemble monolithique (22), ledit au moins un faisceau de fils de renfort (10) dudit premier sous-ensemble monolithique (12) étant superposé avec une face inférieure opposée à ladite face supérieure dudit second sous-ensemble monolithique (22) et
• une étape de polymérisation (5) d'une résine (14) dans ledit moule (13).

2. Procédé de fabrication selon la revendication 1,
**caractérisé en ce que** chaque étape de positionnement (2) dudit au moins un faisceau de fils de renfort (10, 20) sur un support (11, 21) est mise en œuvre simultanément avec une étape de solidarisation (3, 43, 53) dudit au moins un faisceau de fils de renfort (10, 20) avec ledit support (11, 21), lesdites étapes de positionnement (2) et lesdites étapes de solidarisation (3, 43, 53) étant effectuées par une même machine.

3. Procédé de fabrication selon l'une quelconque des revendications 1 à 2,
**caractérisé en ce que** ladite étape de superposition (4) d'une pluralité de sous-ensembles monolithiques (12, 22) dans un moule (13) comporte une sous-étape de vrillage (41) desdits sous-ensembles monolithiques (12, 22).

4. Procédé de fabrication selon l'une quelconque des revendications 1 à 3,
**caractérisé en ce que**, préalablement à ladite pluralité d'étapes de positionnement (2), ledit procédé (41) comporte une étape de dévrillage (46) pour obtenir une forme dévrillée à partir d'une forme finale dudit organe de renfort (30) puis une étape de discrétisation (47) de ladite forme dévrillée en une pluralité de formes planes parallèles, lesdites étapes de dévrillage (46) puis de discrétisation (47) définissant la forme et le nombre de sous-ensembles monolithiques (12, 22) formant ledit organe de renfort (30).

5. Procédé de fabrication selon l'une quelconque des revendications 1 à 3,
**caractérisé en ce que**, préalablement à ladite pluralité d'étapes de positionnement (2), ledit procédé (51) comporte une étape de discrétisation (56) d'une forme finale dudit organe de renfort (30) en une pluralité de formes vrillées parallèles puis une étape de dévrillage (57) pour obtenir une pluralité de formes planes à partir de ladite pluralité de formes vrillées, lesdites étapes de discrétisation (56) puis de dévrillage (57) définissant la forme et le nombre de sous-ensembles monolithiques (12, 22) formant ledit organe de renfort (30).

6. Procédé de fabrication selon l'une quelconque des revendications 1 à 5,
**caractérisé en ce que** chaque étape de solidarisation (3) comporte une étape de couture dudit au moins un faisceau de fils de renfort (10, 20) sur ledit support (11, 21).

7. Procédé de fabrication selon l'une quelconque des revendications 1 à 6,
**caractérisé en ce que** chaque étape de solidarisation (43) comporte une étape de collage dudit au moins un faisceau de fils de renfort (10, 20) sur ledit support (11, 21).

8. Procédé de fabrication selon l'une quelconque des revendications 1 à 7,
**caractérisé en ce que** chaque étape de solidarisation (53) comporte une solidarisation par une pluralité de liens thermoplastiques dudit au moins un faisceau de fils de renfort (10, 20) sur ledit support (11, 21).

9. Procédé de fabrication selon la revendication 8,
**caractérisé en ce que** lesdits liens thermoplastiques sont formés dans un matériau fusible avec ladite résine (14).

10. Procédé de fabrication selon l'une quelconque des revendications 1 à 9,
**caractérisé en ce que**, préalablement à ladite étape de superposition (4) de ladite pluralité de sous-ensembles monolithiques (12, 22) dans ledit moule (13), ledit procédé de fabrication (51) comporte une étape de découpe (58) de ladite pluralité de sous-ensembles monolithiques (12, 22).

11. Procédé de fabrication selon l'une quelconque des revendications 1 à 10,
**caractérisé en ce que**, préalablement à ladite étape de polymérisation (5) de ladite résine (14) dans ledit moule (13), ledit procédé de fabrication (51) comporte une étape de mise en place (59) d'un équipement (32) dans ledit moule (13), ledit équipement (32) s'entendant au moins selon une direction parallèle à ladite direction de superposition de ladite pluralité de sous-ensembles monolithiques (12, 22).

12. Procédé de fabrication selon l'une quelconque des revendications 1 à 11,
**caractérisé en ce que**, ladite pluralité de sous-ensembles monolithiques (12, 22) comportant un premier et un second sous-ensembles monolithiques (12, 22), ledit procédé de fabrication (61) comporte une étape supplémentaire de solidarisation (66) dudit premier sous-ensemble monolithique (12) avec ledit second sous-ensemble monolithique (22).

13. Procédé de fabrication selon la revendication 12,
**caractérisé en ce que** ladite étape supplémentaire de solidarisation (66) consiste en une solidarisation choisie parmi le groupe comportant la couture, le collage et le cloutage.

14. Procédé de fabrication selon l'une quelconque des revendications 1 à 13,
**caractérisé en ce que** ledit support (11, 21) d'un ensemble monolithique (12, 22) est choisi parmi le groupe comportant les grilles, les nappes textiles tissées, les mats textiles non tissés et les films.

15. Procédé de fabrication selon l'une quelconque des revendications 1 à 14,
**caractérisé en ce que** ledit support (11, 21) d'un ensemble monolithique (12, 22) est formé dans un matériau fusible avec ladite résine (14).

16. Procédé de fabrication selon l'une quelconque des revendications 1 à 15,
**caractérisé en ce que** ladite étape de superposition (4) d'une pluralité de sous-ensembles monolithiques (12, 22) dans un moule (13) est automatisée au moyen d'un robot configuré pour identifier différents sous-ensembles monolithiques (12, 22) stockés dans un magasin.

## Patentansprüche

1. Herstellungsverfahren (1, 41, 51, 61) für ein Verstärkungsorgan (30) eines Blatts (31) eines Luftfahrzeugs,
wobei das Verfahren (1, 41, 51, 61) mindestens umfasst:
- eine Mehrzahl von Positionierungsschritten (2) zum Positionieren von Bündeln von Verstärkungsfäden (10, 20) auf Oberseiten von Trägern (11, 21), wobei jeder Positionierungsschritt (2) ein Positionieren von mindestens einem Bündel von Verstärkungsfäden (10) auf einem Träger (11) umfasst,
- eine Mehrzahl von Verbindungsschritten (3, 43, 53) zum Verbinden der Bündel von Verstärkungsfäden (10, 20) mit den Oberseiten der Träger (11, 21), wobei jeder Verbindungsschritt (3, 43, 53) ein Verbinden des mindestens einen Bündels von Verstärkungsfäden (10, 20) mit dem Träger (11, 21) umfasst, um eine monolithische Unterbaugruppe (12, 22) zu bilden,
- einen Schritt des Überlagerns (4) einer Mehrzahl von monolithischen Unterbaugruppen (12, 22) in einer gleichen Überlagerungsrichtung in einer Form (13), wobei die Mehrzahl von monolithischen Unterbaugruppen (12, 22) eine erste monolithische Unterbaugruppe (12) und eine zweite monolithische Unterbaugruppe (22) umfasst, wobei das mindestens eine Bündel von Verstärkungsfäden (10) der ersten monolithischen Unterbaugruppe (12) mit einer der Oberseite gegenüberliegenden Unterseite der zweiten monolithischen Unterbaugruppe (22) überlagert wird, und
- einen Schritt des Polymerisierens (5) eines Harzes (14) in der Form (13).

2. Herstellungsverfahren nach Anspruch 1,
**dadurch gekennzeichnet, dass** jeder Schritt des Positionierens (2) des mindestens einen Bündels von Verstärkungsfäden (10, 20) auf einem Träger (11, 21) gleichzeitig mit einem Schritt des Verbindens (3, 43, 53) des mindestens einen Bündels von Verstärkungsfäden (10, 20) mit dem Träger (11, 21) durchgeführt wird, wobei die Schritte des Positionierens (2) und die Schritte des Verbindens (3, 43, 53) von ein und derselben Maschine ausgeführt werden.

3. Herstellungsverfahren nach einem der Ansprüche 1 bis 2,
**dadurch gekennzeichnet, dass** der Schritt des Überlagerns (4) einer Mehrzahl von monolithischen Untereinheiten (12, 22) in einer Form (13) einen Unterschritt des Verwindens (41) der monolithischen Untereinheiten (12, 22) umfasst.

4. Herstellungsverfahren nach einem der Ansprüche 1 bis 3,
**dadurch gekennzeichnet, dass** vor der Mehrzahl von Positionierungsschritten (2) das Verfahren (41) einen Schritt des Entwindens (46), um ausgehend von einer Endform des Verstärkungsorgans (30) eine windungsfreie Form zu erhalten, und dann einen Schritt des Diskretisierens (47) der windungsfreien Form in eine Mehrzahl von parallelen ebenen Formen umfasst, wobei die Schritte des Entwindens (46) und dann des Diskretisierens (47) die Form und die Anzahl von das Verstärkungsorgan (30) bildenden monolithischen Untereinheiten (12, 22) definieren.

5. Herstellungsverfahren nach einem der Ansprüche 1 bis 3,
**dadurch gekennzeichnet, dass** das Verfahren (51) vor der Mehrzahl von Positionierungsschritten (2) einen Schritt des Diskretisierens (56) einer endgültigen Form des Verstärkungsorgans (30) in eine Mehrzahl von parallelen verwundenen Formen und dann einen Schritt des Entwindens (57) umfasst, um aus der Mehrzahl von verwundenen Formen eine Mehrzahl von flachen Formen zu erhalten, wobei die Schritte des Diskretisierens (56) und dann des Entwindens (57) die Form und die Anzahl der das Verstärkungsorgan (30) bildenden monolithischen Untereinheiten (12, 22) definieren.

6. Herstellungsverfahren nach einem der Ansprüche 1 bis 5,
**dadurch gekennzeichnet, dass** jeder Verbindungsschritt (3) einen Schritt des Vernähens des mindestens einen Bündels von Verstärkungsfäden (10, 20) auf dem Träger (11, 21) umfasst.

7. Herstellungsverfahren nach einem der Ansprüche 1 bis 6,
**dadurch gekennzeichnet, dass** jeder Verbindungsschritt (43) einen Schritt des Klebens des mindestens einen Bündels von Verstärkungsfäden (10, 20) auf den Träger (11, 21) umfasst.

8. Herstellungsverfahren nach einem der Ansprüche 1 bis 7,
**dadurch gekennzeichnet, dass** jeder Verbindungsschritt (53) ein Verbinden des mindestens einen Bündels von Verstärkungsdrähten (10, 20) mit dem Träger (11, 21) durch eine Mehrzahl von thermoplastischen Verbindungen umfasst.

9. Herstellungsverfahren nach Anspruch 8,
**dadurch gekennzeichnet, dass** die thermoplastischen Verbindungen aus einem Material gebildet werden, das zusammen mit dem Harz (14) schmelzbar ist.

10. Herstellungsverfahren nach einem der Ansprüche 1 bis 9,
**dadurch gekennzeichnet, dass** vor dem Schritt des Überlagerns (4) der mehreren monolithischen Untereinheiten (12, 22) in der Form (13) das Herstellungsverfahren (51) einen Schritt des Zuschneidens (58) der mehreren monolithischen Untereinheiten (12, 22) umfasst.

11. Herstellungsverfahren nach einem der Ansprüche 1 bis 10,
**dadurch gekennzeichnet, dass** vor dem Schritt des Polymerisierens (5) des Harzes (14) in der Form (13) das Herstellungsverfahren (51) einen Schritt des Anordnens (59) einer Einrichtung (32) in der Form (13) umfasst, wobei sich die Einrichtung (32) zumindest in einer Richtung parallel zur Richtung der Überlagerung der Mehrzahl von monolithischen Untereinheiten (12, 22) erstreckt.

12. Herstellungsverfahren nach einem der Ansprüche 1 bis 11,
**dadurch gekennzeichnet, dass** die Mehrzahl von monolithischen Unterbaugruppen (12, 22) eine erste und eine zweite monolithische Unterbaugruppe (12, 22) umfasst, und dass das Herstellungsverfahren (61) einen zusätzlichen Schritt des Zusammenfügens (66) der ersten monolithischen Unterbaugruppe (12) mit der zweiten monolithischen Unterbaugruppe (22) umfasst.

13. Herstellungsverfahren nach Anspruch 12,
**dadurch gekennzeichnet, dass** der zusätzliche Schritt des Zusammenfügens (66) aus einem Zusammenfügen besteht, das aus der Gruppe ausgewählt wird, die das Nähen, das Kleben und das Nageln umfasst.

14. Herstellungsverfahren nach einem der Ansprüche 1 bis 13,
**dadurch gekennzeichnet, dass** der Träger (11, 21) einer monolithischen Anordnung (12, 22) aus der Gruppe ausgewählt wird, die Gitter, gewebte Textilmatten, nicht gewebte Textilmatten und Folien umfasst.

15. Herstellungsverfahren nach einem der Ansprüche 1 bis 14,
**dadurch gekennzeichnet, dass** der Träger (11, 21) einer monolithischen Anordnung (12, 22) aus einem Material gebildet ist, das mit dem Harz (14) schmelzbar ist.

16. Herstellungsverfahren nach einem der Ansprüche 1 bis 15,
**dadurch gekennzeichnet, dass** der Schritt des Überlagerns (4) einer Mehrzahl von monolithischen Unterbaugruppen (12, 22) in einer Form (13) mittels eines Roboters automatisiert wird, der konfiguriert ist, um verschiedene in einem Magazin gelagerte monolithische Unterbaugruppen (12, 22) zu identifizieren.

## Claims

1. Method (1, 41, 51, 61) for manufacturing a reinforcing member (30) for a blade (31) of an aircraft,
said method (1, 41, 51, 61) comprising at least:
• a plurality of positioning steps (2) for positioning bundles of reinforcing threads (10, 20) on upper faces of supports (11, 21), each positioning step (2) comprising positioning at least one bundle of reinforcing threads (10) on a support (11);
• a plurality of securing steps (3, 43, 53) for securing said bundles of reinforcing threads (10, 20) with said upper faces of said supports (11, 21), each securing step (3, 43, 53) comprising securing said at least one bundle of reinforcing threads (10, 20) with said support (11, 21) in order to form a monolithic sub-assembly (12, 22);
• a step (4) of overlaying a plurality of monolithic sub-assemblies (12, 22) in a mould (13) in the same overlaying direction, said plurality of monolithic sub-assemblies (12, 22) comprising a first monolithic sub-assembly (12) and a second monolithic sub-assembly (22), said at least one bundle of reinforcing threads (10) of said first monolithic sub-assembly (12) being overlaid with a lower face opposite said upper face of said second monolithic sub-assembly (22); and
• a step (5) of polymerizing a resin (14) in said mould (13).

2. Manufacturing method according to Claim 1,
**characterized in that** each step (2) of positioning said at least one bundle of reinforcing threads (10, 20) on a support (11, 21) is simultaneously implemented with a step (3, 43, 53) of securing said at least one bundle of reinforcing threads (10, 20) with said support (11, 21), said positioning steps (2) and said securing steps (3, 43, 53) being performed by the same machine.

3. Manufacturing method according to any one of Claims 1 to 2,
**characterized in that** said step (4) of overlaying a plurality of monolithic sub-assemblies (12, 22) in a mould (13) comprises a sub-step of twisting (41) said monolithic sub-assemblies (12, 22).

4. Manufacturing method according to any one of Claims 1 to 3,
**characterized in that**, prior to said plurality of positioning steps (2), said method (41) comprises a step (46) of untwisting for obtaining an untwisted shape from a final shape of said reinforcing member (30), then a step (47) of discretizing said untwisted shape into a plurality of parallel flat shapes, with said steps of untwisting (46) then of discretizing (47) defining the shape and the number of monolithic sub-assemblies (12, 22) forming said reinforcing member (30).

5. Manufacturing method according to any one of Claims 1 to 3,
**characterized in that**, prior to said plurality of positioning steps (2), said method (51) comprises a step (56) of discretizing a final shape of said reinforcing member (30) into a plurality of parallel twisted shapes, then a step (57) of untwisting for obtaining a plurality of flat shapes from said plurality of twisted shapes, with said steps of discretizing (56) then of untwisting (57) defining the shape and the number of monolithic sub-assemblies (12, 22) forming said reinforcing member (30).

6. Manufacturing method according to any one of Claims 1 to 5,
**characterized in that** each securing step (3) comprises a step of stitching said at least one bundle of reinforcing threads (10, 20) onto said support (11, 21).

7. Manufacturing method according to any one of Claims 1 to 6,
**characterized in that** each securing step (43) comprises a step of bonding said at least one bundle of reinforcing threads (10, 20) onto said support (11, 21).

8. Manufacturing method according to any one of Claims 1 to 7,
**characterized in that** each securing step (53) comprises securing, using a plurality of thermoplastic bonds, said at least one bundle of reinforcing threads (10, 20) on said support (11, 21).

9. Manufacturing method according to Claim 8,
**characterized in that** said thermoplastic bonds are formed in a material that is fusible with said resin (14).

10. Manufacturing method according to any one of Claims 1 to 9,
**characterized in that**, prior to said step (4) of overlaying said plurality of monolithic sub-assemblies (12, 22) in said mould (13), said manufacturing method (51) comprises a step (58) of cutting said plurality of monolithic sub-assemblies (12, 22).

11. Manufacturing method according to any one of Claims 1 to 10,
**characterized in that**, prior to said step (5) of polymerizing said resin (14) in said mould (13), said manufacturing method (51) comprises a step (59) of placing an item of equipment (32) in said mould (13), said item of equipment (32) at least extending in a direction parallel to said overlaying direction of said plurality of monolithic sub-assemblies (12, 22).

12. Manufacturing method according to any one of Claims 1 to 11,
**characterized in that**, with said plurality of monolithic sub-assemblies (12, 22) comprising a first and a second monolithic sub-assembly (12, 22), said manufacturing method (61) comprises an additional step (66) of securing said first monolithic sub-assembly (12) with said second monolithic sub-assembly (22).

13. Manufacturing method according to Claim 12,
**characterized in that** said additional securing step (66) involves a means of securing selected from the group comprising stitching, bonding and pinning.

14. Manufacturing method according to any one of Claims 1 to 13,
**characterized in that** said support (11, 21) of a monolithic assembly (12, 22) is selected from the group comprising meshes, woven textile plies, non-woven textile mats and films.

15. Manufacturing method according to any one of Claims 1 to 14,
**characterized in that** said support (11, 21) of a monolithic assembly (12, 22) is formed in a material that is fusible with said resin (14).

16. Manufacturing method according to any one of Claims 1 to 15,
**characterized in that** said step (4) of overlaying a plurality of monolithic sub-assemblies (12, 22) in a mould (13) is automated by means of a robot configured to identify various monolithic sub-assemblies (12, 22) stored in a store.
